# EUROPEAN PATENT APPLICATION

(11) **EP 2 085 254 A1**
(43) Date of publication of application: **05.08.2009**
(21) Application number: 09151339.0
(22) Date of filing: 26.01.2009
(51) Int. Cl.: B60C 23/04

(54) **A vehicle monitoring system and method**

(30) Priority: 31.01.2008 US 23504
(71) Applicant: The Goodyear Tire & Rubber Company, Akron, OH 44316-0001 (US)
(72) Inventor: Lettieri, Joseph Carmine, Hudson 44236 (US); Benedict, Robert Leon, Tallmadge, OH 44278 (US); Lionetti, Robert Edward, 7227 Bereldange (LU); Parsons, Anthony William, 1466 Bereldange (LU)
(74) Representative: Kutsch, Bernd

(57) **Abstract**

A monitoring system (10) and method is provided for a vehicle or tire monitoring. The system (10) includes a service station (40) through which the vehicle passes (42, 44). While situated within the service station (40), an initiation signal is generated prompting data transmission from wheel unit (12) based monitoring device (20) to a receiver (28). An output device may be employed to visually display information responsive to the transmitted data.

## Description

### Field of the Invention

The present invention relates generally to a monitoring system for a vehicle and, in particular, to a tire or tire pressure monitoring system.

### Background of the Invention

In commercial trucking the tires on a trailer are the highest cost item in the operation of such trailers due to theft, damage and normal replacement. It is common within the commercial trucking industry for trailers to be either leased by a trailer leasing entity to a trucking company pulling the trailers or owned directly by the trucking company. In either case, it is important that the tires on each trailer be identified and monitored in order to minimize operational costs associated with their use. In addition, it is desirable to monitor in a cost effective and timely manner certain tire parameters such as air pressure in order to evaluate tire condition and performance.

### Summary of the Invention

The invention relates to a monitoring system for a vehicle according to claim 1 and to a method according to claim 12.

Dependent claims refer to preferred embodiments of the invention.

In one aspect of the invention, a system is provided for monitoring a vehicle including one or more wheel units of the vehicle. Each wheel unit includes a wheel rim; a tire mounted to the wheel rim; and a tire monitoring device mounted to the wheel unit and operatively generating a data transmission communicating the state of certain tire parameters. The data transmission is responsive to an initiation signal. The system includes a preferably drive-by initiation signal generator within a service station. A receiver within the service station is deployed for receiving the data transmission and an output device may be employed to visually display information responsive to the transmitted data.

Pursuant to another aspect, the initiation signal generator is a stationary device positioned within the service station. A vehicle such as a commercial trucking tractor/trailer is driven into the service station and locates the trailer and/or tractor wheel units into operative proximity with the initiation signal generator. The initiation signal generator may be a low frequency magnetic field generator antenna embedded within a ground pad within the service station or one or more freestanding above-ground unit(s).

In yet another aspect, the data transmission communicates the status of one or more parameters such as: vehicle specific information; tire specific information; cargo specific information; and itinerary specific information. Data conveying measured pressure and/or temperature within the tire of the wheel units may also be transmitted. The tire monitoring device may be affixed to the tire or to the wheel rim of a wheel unit.

According to another aspect of the invention, a method for monitoring a wheel unit of a vehicle is provided, the method including: moving a vehicle and its associate wheel unit(s) into a service station having an initiation signal generator located therein; positioning a tire monitoring device of at least one wheel unit into operational proximity with the initiation signal generator; generating an initiation signal utilizing the initiation signal generator; commencing data transmission from the tire monitoring device affixed to the wheel unit responsive to the initiation signal; and transmitting data from the tire monitoring device to a remote receiver within the service station.

### Definitions

"Axial" and "axially" mean the lines or directions that are parallel to the axis of rotation of the tire.

"Footprint" means the contact patch or area of contact of the tire tread with a flat surface at zero speed and under normal load and pressure.

### Brief Description of the Drawings

The invention will be described by way of example and with reference to the accompanying drawings in which:
FIG. 1 is a schematic diagram of a monitoring system embodying the subject invention.
FIG. 2 is a top plan view of a coupled tractor-trailer utilizing the monitoring system.
FIG. 3 is a side elevational view of a coupled tractor-trailer utilizing the monitoring system.
FIG. 4 is a rear elevational view of a coupled tractor- trailer utilizing the monitoring system.
FIG. 5 is an enlarged view of a portion of the elevational view of FIG. 4.
FIG. 6A is a top schematic diagram of the initiation signal generator shown in an in-ground, rectangular, two loop configuration.
FIG. 6B is a top schematic diagram of the initiation signal generator shown in an alternative rectangular, three loop configuration.
FIG. 6C is a top schematic diagram of the initiation signal generator shown in a second alternative ovular, two loop configuration.
FIG. 7 is front perspective view of the initiation signal generator shown in a freestanding rectangular, two loop configuration.
FIG. 7A is a perspective schematic diagram of the service station having an initiation signal generator configured pursuant to FIG. 7.
FIG. 8 is a front perspective view of the initiation signal generator shown in a wound ferrite rod configuration.
FIG. 8A is a perspective schematic diagram of the service station having an initiation signal generator configured pursuant to FIG. 8.

### Detailed Description of the Invention

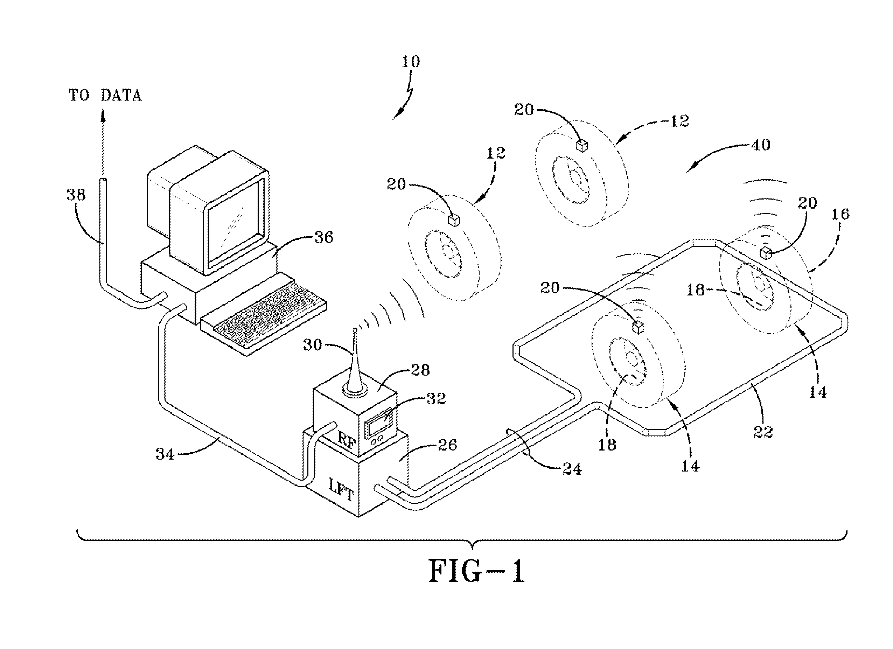

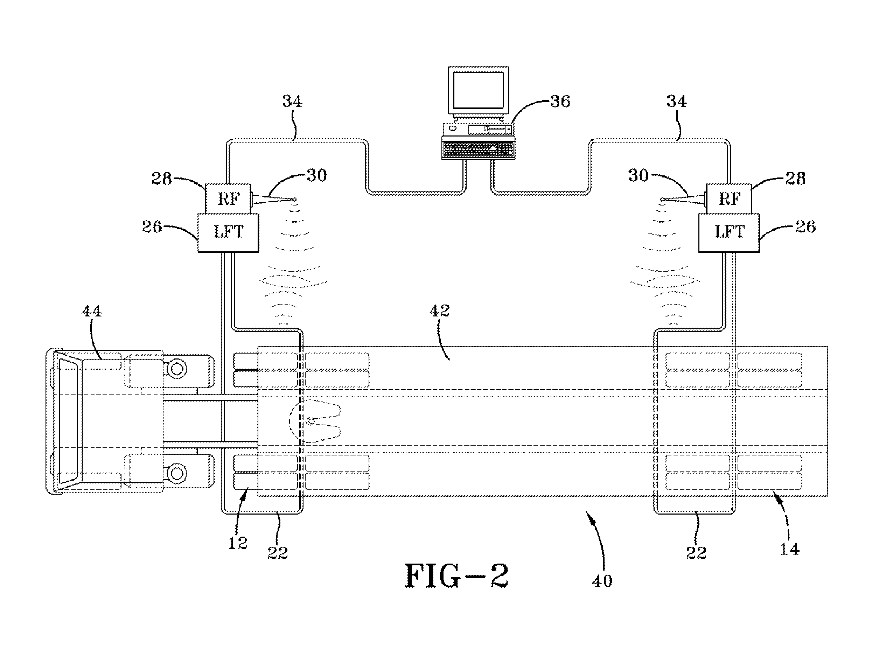

Referring initially to FIGS. 1, 2, and 3, a monitoring system 10 is shown in schematic representation for use in monitoring one or more parameters from forward and rearward pairs of wheel units 12, 14. While four wheel units are represented, more or fewer monitored wheel units may be employed. Each wheel unit 12, 14 includes a tire 16 mounted to a wheel rim 18 and one or more monitoring devices 20 mounted to either the tire 16, such as by means of a patch adhesively attached to the tire inner liner, or the wheel rim 18. As shown in FIG. 2, the subject monitoring system finds particular application in the monitoring of wheel units in a coupled tractor-trailer 44, 42 as will be explained. However, the invention is not intended to be so limited and the monitoring of wheel units on other types of vehicles in other applications is also within the scope of the invention.

The monitoring device 20 is of a type employing one or more application specific integrated circuits and one or more sensor devices that deploy to measure certain tire parameters such as air pressure and temperature. In addition, the integrated circuit(s) may include memory programmable to store vehicle specific, tire specific, cargo specific, and/or itinerary specific information. A device having such capability is commercially available in the industry such as Original Equipment part number 6G921A159BA and Replacement part number S180014791Z manufactured by Continental AG. The device 20 is of a type used in tire pressure monitoring systems in use in commercial or passenger vehicles and preferably includes one or more sensors for detecting certain tire parameters such as tire cavity air pressure and/or temperature. In addition, data identifying the tire, the wheel unit, the vehicle, the identity, source and destination of cargo carried by the transport vehicle may be stored as data within the device 20 to be accessed as needed or desired. The device 20 includes an RF transmitter and logic for transmitting data relating to measured tire parameters and/or stored reference data to a remote receiver for analysis and display. The device 20 may be packaged as a patch and affixed to an inner liner of the tire 16 or as an assembly attached to the wheel rim 18. The device 20 further includes a receiver and logic for receipt of an initiation signal from a source external to the wheel units 12, 14. The transmission of data from the device 20 to a remote receiver is in response to receipt of the initiation signal. Thus, operationally, the data transmission circuitry of device 20 conveying tire/vehicle data to an external reader is activated by the receipt of an externally originating initiation signal by a receiver within the device 20.

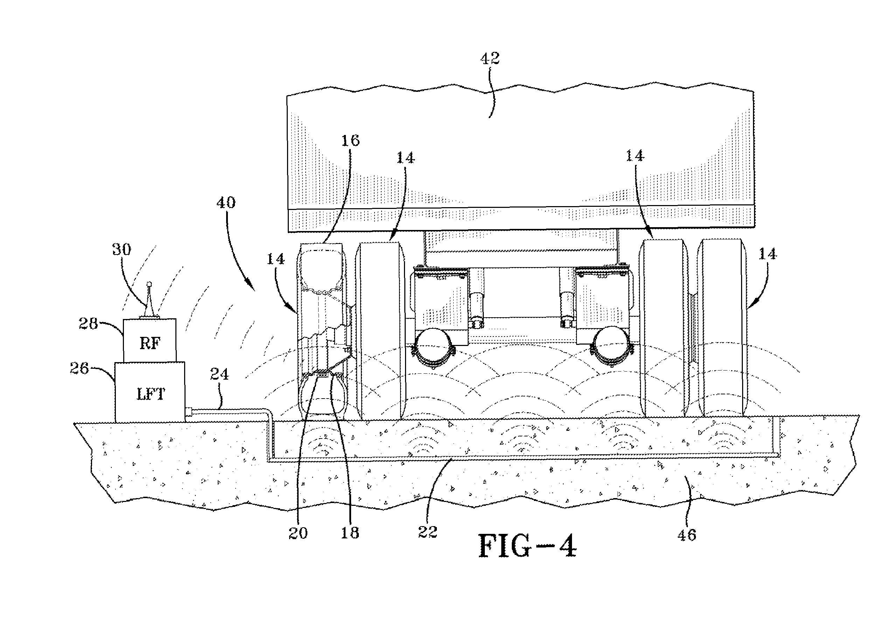

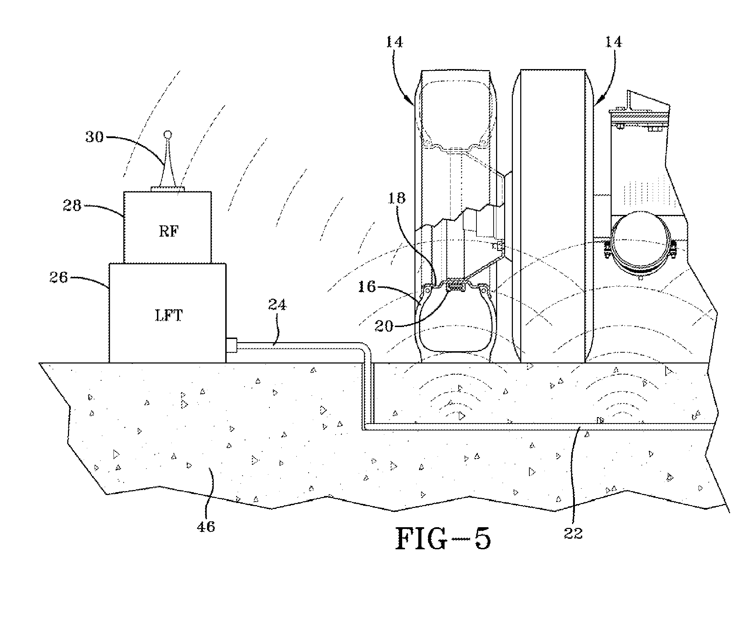

One or more Low Frequency (LF) antennas are positioned at locations suitable for operationally delivering an LF initiation signal to one or more wheel units 12, 14 of a vehicle as the vehicle drives through a service station 40. The LF antenna(s) in the embodiment shown are of a loop configuration, each formed by one or more LF antenna loop(s) 22. The LF antenna loops 22 in the embodiment of FIGS. 1-6 may be embedded within a ground pad 46 located in the service station 40. Positioned adjacent to the ground pad 46 in operational proximity to the monitoring device 20 is an RF receiver 28 including an RF antenna 30. The receiver antenna 30 receives data transmission from the one or more vehicle monitoring devices 20 mounted to the wheel units 12, 14. The vehicle may be repositioned sequentially within the service station 40 to allow each monitoring device 20 to be sequentially brought into initiation signal range of a single LF antenna, whereupon each device 20 is activated and placed into a data transmitting mode for data transmission to the receiver 28. Alternatively, multiple receiver/antenna pairs 28 may be positioned within the service station 40, each assigned to receive data transmission from one or more respective monitoring devices 20 of the vehicle. Employment of multiple RF receiver/LF transmitter pairs within the station reduces the time required for the data transmission to be completed. Whether sequentially or in unison, each monitoring device 20 of the vehicle, in response to an LF initiation signal, may be activated to transmit RF encoded data to the receiver 28.

The LF loop antenna 22 is electrically connected by conductor 24 to an LF transmitter 26. RF receiver 28 is coupled to RF antenna 30 and receives the RF transmission of data from one or more assigned devices 20. The RF receiver may be coupled to an output device, such as display screen 32 that is useful in visually conveying information to an operator. In addition, data from the receiver 28 may be transmitted via connection 34 to a data processing system such as computer 36 for further processing and sharing of the data along output lines 38 to other terminals.

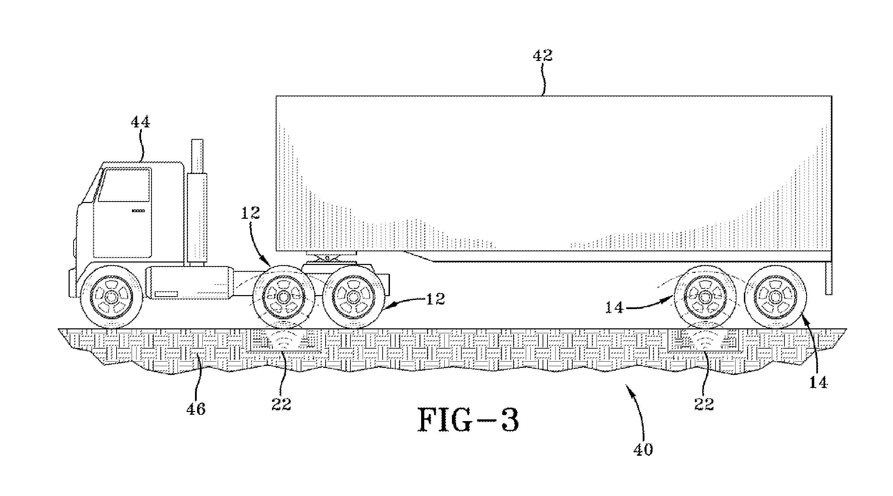

As used herein, "vehicle" is used in its generic sense as encompassing any wheel based mobile transport mechanism. The "vehicle" may, by way of example, consist of a passenger automobile or a cargo- transporting tractor/trailer tandem such as depicted in FIGS. 3-8. Other types of vehicles known in the art can likewise utilize the invention. The vehicle shown in FIGS. 3-8 includes a multi-axle trailer 42 coupled to a tractor 44. The front and rearward tire units 12, 14 of the trailer 42 are equipped with a monitoring device 20 as described. Additionally, if desired, the tires of the tractor 44 may include a monitoring device 20. The LF loop antenna 22 is embedded within a ground pad 46 that is located in the service station 40. The service station 40 may be located wherever practical, optimal, or convenient to suit the user. For example, the service station 40 may be located proximate a gate through which trailers depart from a fenced secured area. Alternatively, or in addition, the service station 40 may be located where the wheel units 12, 14 in a fleet are serviced. A service station 40 may also be located at the destination where cargo is loaded or unloaded from a trailer. In short, one or more service stations 40 may be deployed wherever a data feed from the wheel units is useful.

The tractor and trailer are moved into the service station 40 until a target wheel unit is positioned within operational proximity to the LF transmitter 26, on top of the LF antenna 22. The monitoring device of the wheel unit is thereby positioned to receive the LF initiation signal that initiates the RF transmittal of data to the RF receiver 28 by means of RF antenna 30. At the conclusion of data transmission, the vehicle may be moved to position another wheel unit into operational proximity to the LF transmitter. The sequence may be repeated until data from some or all of the monitoring devices is received as desired. The vehicle, at the conclusion of data transmission from its monitoring devices, may be moved out of the service station 40, clearing the station for admission by another vehicle.

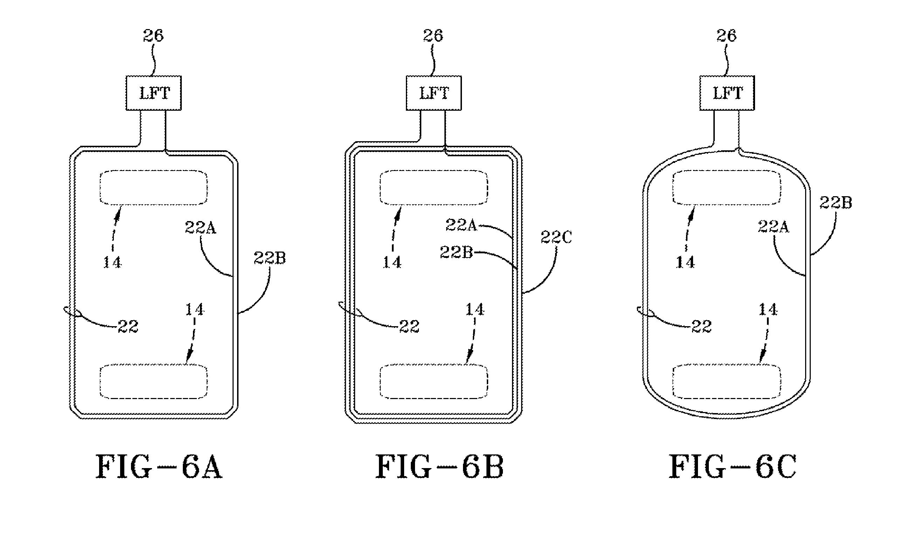

The LF antenna 22 may be embedded in the service station pad 46 as described above. So positioned, the antenna is protected from impact with external objects and is optimally positioned below the monitoring device 20 and wheel unit that is to be accessed. The antenna 22 may be in the form of a single loop or a plurality of loops as will be appreciated from FIGS. 6A-6C. Other loop antenna configurations known within the industry may also be deployed. FIG. 6A shows a loop antenna in an in-ground, rectangular, two loop 22A, 22B configuration. FIG. 6B is a variation showing an alternative rectangular, three loop 22A, 22B, 22C antenna configuration. FIG. 6C shows a second alternative ovular, two loop 22A, 22B antenna configuration. It will be appreciated from FIGS. 6A-6C that the footprint defined by the antenna 22 may be sized to align with only a singe wheel unit 14 or may, as shown, be sized to surround multiple wheel units of a vehicle. The LF transmitter 26 is positioned to the side of the ground pad 46 into which the LF antenna 22 is situated.

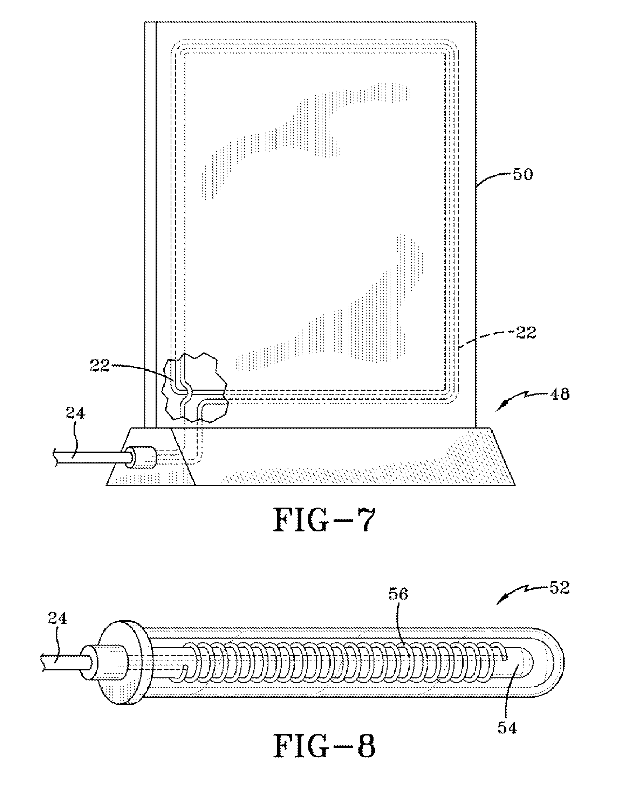

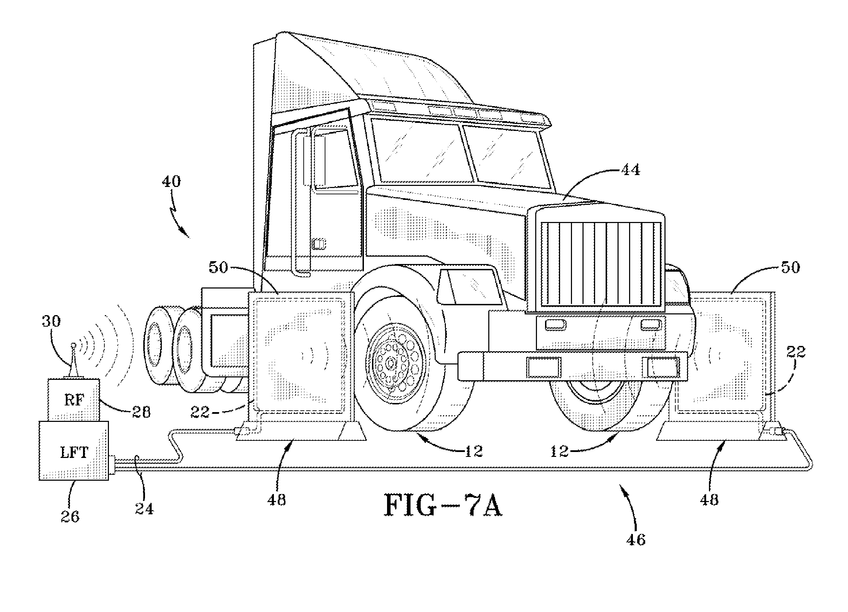

The in-ground drive-by configuration and positioning of the LF antenna 22 shown in FIGS. 1-6C inclusive may be employed or alternative antenna configurations and locations may be used if desired. Delivery of an initiation signal to the monitoring device 20 that activates data transmission from the device 20 to the RF receiver 28 may be effected by alternative LF antenna configurations and locations. By way of example, without intent to delimit the invention, an alternative upright panel LF antenna configuration is shown in FIGS. 7 and 7A. A vertically oriented, freestanding panel assembly 48 includes a support panel 50 that encases the LF antenna loop(s) 22 and maintains the antenna in an orientation toward the ground pad 46 in the service station 40. More than one of the assemblies 48 may be utilized and positioned opposite sides of a vehicle moved into the station 40 as shown in FIG. 7A. As described previously, the LF transmitter 26 through antenna assembly(s) 48 emits an initiation signal detected by a monitoring device in wheel unit 12. Upon receipt of the initiation signal, the device is activated to transmit data relating to certain tire parameters such as air pressure and temperature. In addition, the integrated circuit(s) within the device may include memory programmable to store vehicle specific, tire specific, cargo specific, and/or itinerary specific information that is RF transmitted to the receiver 28. The transmitted data may be recorded and stored as well as displayed to an operator. The wheel units 12, 14 and the tire components therein may thereby be identified and correlated against the identity of the trailer 42 and tractor 44 to ensure that the proper wheel units are still on the vehicle. In addition, the identity, origination, and destination of the cargo transported by the trailer may be stored in the wheel unit and transmitted to the receiver 28 to verify proper shipment of goods. The use of freestanding assemblies 48 provides flexibility in allowing adjustment to the orientation and spacing of the LF antenna within the service station 40. Adjustment of the LF antenna may prove beneficial to correlate the position and spacing of the LF antenna(s) with the orientation and wheel unit spacing of a particular vehicle in the station 40.

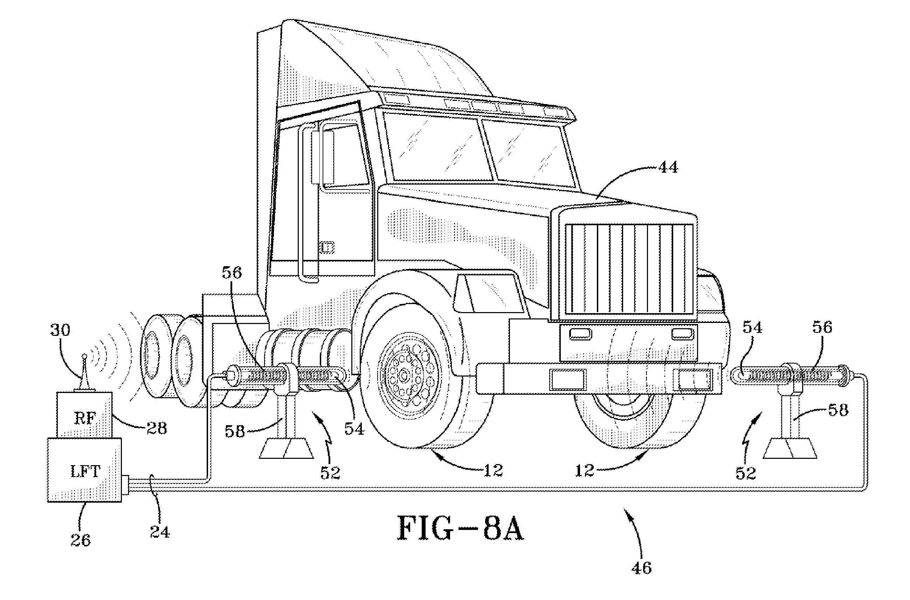

FIGS. 8 and 8A show another alternatively embodied LF system in which one or more rod assemblies 52 are positioned adjacent the wheel unit(s) 12 of a vehicle within the service station 40. Each rod assembly 52 includes a ferrite rod 54 surrounded by a winding 56 in a freestanding stand unit 58. As with the panel assemblies 48, more than one assembly 52 may be utilized and positioned on opposite sides of a vehicle within the station 40 as shown in FIG. 8A. The LF transmitter 26 through antenna assembly(s) 52 emits an initiation signal detected by one or more monitoring devices in the vehicle wheel units. Transmission of tire parameter measurement data and/or vehicle specific, tire specific, cargo specific, and itinerary specific information upon initiation may be made to the receiver 28. As with the panel assemblies 48, the units 52 provide flexibility in allowing potentially beneficial adjustment to the orientation and spacing of the LF antenna within the service station 40.

From the foregoing, it will be appreciated that the service station 40 may be constructed in locations beneficial to the exchange of data between the monitoring device(s) 20 and external data processing and display devices. The stationary system 10 generates a low frequency magnetic field that stimulates a transmission from one or more wheel units of a vehicle that may be part of a tire pressure monitoring system (TPMS). The stationary system also receives and decodes the data message from the wheel unit(s) and may provide a service indicator to the driver and a digital message to the fleet management system. The system consists of the LF function generator capable of modulation consistent with the TPMS specifications. The LF antenna(s) may be constructed in alternative configurations depending on the needs of a particular service station installation. For example, the LF antenna(s) may comprise a wire loop in the ground or a side panel of a wire wound ferrite rod. The RF transmission from the monitoring device(s) are received, demodulated and decoded by an operationally positioned RF receiver that may provide a digital output and/or driver display in the form of a digital screen or a light bar.

In a commercial trucking application, the subject service station(s) may be located where trailers are compounded. As a truck passes through an entry gate, for example, it may pass through a system service station 40. A read event could then be conducted that captures: the container identification including the goods being transported; the tractor identification; the trailer identification; and associated tire identification. The identity of the tires may then be compared against records in order to ensure that the same tires are on the trailer. In addition, the driver, upon verification of tractor, trailer, and cargo identities, can receive instruction on where to drop the trailer and/or cargo and what location to pick up the next trailer and/or cargo.

In practice, the subject system 10 may be a drive through gate that instantly captures the relevant data and gives instructions to the driver. Manual identification of the tractor, trailer, and tires that can cause back-up lines and delay at dispatch centers can thereby be avoided.

## Claims

1. A monitoring system for a vehicle having at least one wheel unit (12), the wheel unit (12) including a wheel rim (18) and tire (16) mounted to the wheel rim (18), the monitoring system (10) comprising:
a pass-through service station (40) for operatively receiving the vehicle (42, 44) therein;
a tire monitoring device (20) mounted to the wheel unit (12) for operatively generating within the service station (40) a data transmission responsive to an initiation signal;
a stationary initiation signal generator (26, 52) within the service station (40) for generating an initiation signal.

2. The monitoring system of claim 1, further comprising a receiver (28) within the service station (40) for receiving the data transmission.

3. The monitoring system of claim 2, further comprising an output device connected to the receiver (28) for generating an output display responsive to the transmitted data.

4. The monitoring system of claim 3, wherein the output device comprises a visible digital output display (32).

5. The monitoring system of claim 3, wherein the output device comprises a visible digital output lightbar.

6. The monitoring system of at least one of the previous claims wherein the receiver (28) includes a data transmission decoder.

7. The monitoring system of at least one of the previous claims wherein the service station (40) includes a vehicle-supporting ground pad (46) proximally positioned to the initiation signal generator (26, 52).

8. The monitoring system of at least one of the previous claims wherein the initiation signal generator (26, 52) is a low frequency magnetic field generator.

9. The monitoring system of claim 8, wherein the low frequency magnetic field generator includes a low frequency antenna (22) embedded in the ground pad (46) within the service station (40).

10. The monitoring system of at least one of the previous claims wherein the vehicle (42, 44) includes a cargo transporting trailer (42).

11. The monitoring system of at least one of the previous claims wherein the system is a tire monitoring system and wherein a tire monitoring device (20) is affixed to at least one wheel unit (12).

12. A method for monitoring a vehicle (42, 44) supported by at least one wheel unit (12), the wheel unit (12) including a wheel rim (18), a tire (16) mounted to the wheel rim (18), and a tire monitoring device (20) affixed to the wheel unit (12), the method comprising:
moving the vehicle (42, 44) into a service station (40) having an initiation signal generator (26, 52) located therein;
positioning the tire monitoring device (20) affixed to the wheel unit (12) into operational proximity with the initiation signal generator (26, 52) while the vehicle (42, 44) is within the service station (40);
generating an initiation signal utilizing the initiation signal generator (26, 52);
effecting data transmission from the tire monitoring device (20) affixed to the wheel unit (12) responsive to the initiation signal;
transmitting data from the tire monitoring device (20) to a remote receiver (28) which is preferably located within the service station (40); and
moving the vehicle (42, 44) from the service station (40).

13. The method of claim 12 further comprising operatively displaying information responsive to the transmitted data.

14. The method of claim 12 or 13 further comprising utilizing a low frequency magnetic field to activate the tire monitoring device and/or utilizing an embedded low frequency antenna in a ground pad within the service station.

15. The method of at least one of the claims 11 to 14 further comprising:
including within the data transmission information relating to at least one parameter from the group: vehicle specific information, tire specific information, cargo specific information, and itinerary specific information.
